(19) Europäisches Patentamt / European Patent Office / Office européen des brevets

(11) **EP 4 163 327 A1**

(12) **EUROPEAN PATENT APPLICATION**

(43) Date of publication:
**12.04.2023 Bulletin 2023/15**

(21) Application number: **21201737.0**

(22) Date of filing: **08.10.2021**

(51) International Patent Classification (IPC):
**C08J 9/00** *(2006.01)*    **C08J 9/10** *(2006.01)*
**C08K 5/00** *(2006.01)*    **C08L 23/06** *(2006.01)*
**H01B 3/30** *(2006.01)*    **C08K 3/01** *(2018.01)*

(52) Cooperative Patent Classification (CPC):
(C-Sets available)
**C08J 9/0061; C08J 9/0066; C08J 9/103;
C08L 23/0815; H01B 3/441;** C08J 2201/03;
C08J 2203/04; C08J 2207/06; C08J 2323/08;
C08J 2423/08; C08L 2203/14          (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **PRIETO, Oscar**
  **444 86 Stenungsund (SE)**
• **GSCHEIDTNER, Tina**
  **444 86 Stenungsund (SE)**

• **HJÄRTFORS, Anna**
  **444 86 Stenungsund (SE)**
• **ANKER, Martin**
  **444 86 Stenungsund (SE)**
• **DAMMERT, Ruth**
  **06850 Kulloo (FI)**
• **WATSON, Ann**
  **Arbroath, Scotland, DD11 3RH (GB)**
• **HAGSTRAND, Per-Ola**
  **444 86 Stenungsund (SE)**
• **WIDENBACK, Louise**
  **444 86 Stenungsund (SE)**

(74) Representative: **Kador & Partner Part mbB**
**Corneliusstraße 15**
**80469 München (DE)**

(54) **FOAMABLE POLYMER COMPOSITIONS WITH IMPROVED ELECTRICAL PROPERTIES**

(57) The present invention relates to a foamable polymer composition comprising (A) a first polyolefin polymer having an MFR$_2$ (2,16 kg; 190 °C) of 0.1 to 25 g/10min measured according to ISO 1133; (B) a second polyolefin polymer having an MFR$_2$ (2.16 kg; 190 °C) of 2 to 15 g/10min measured according to ISO 1133, and (C) a mineral nucleating agent (C) in an amount of 0.001 wt.% to 1 wt.% based on the total foamable polymer composition; wherein the mineral nucleating agent (C) comprises at least one zeolite, at least one metal carbonate or at least one metal hydrogen carbonate; wherein the first polyolefin polymer (A) has a higher density than the second polyolefin polymer (B); and wherein the foamable polymer composition has a dissipation factor at 1.9 GHz of 116·10$^{-6}$ or lower.

(52) Cooperative Patent Classification (CPC): (Cont.)

C-Sets
**C08L 23/0815, C08L 23/04**

**Description**

The invention relates to a foamable polymer composition and a foamed polymer composition obtained by foaming the foamable polymer composition. The invention further relates to a cable comprising at least one layer which comprises the foamable polymer composition or the foamed polymer composition, and the use of the foamable polymer composition for lowering the dissipation factor of a cable.

Communication cables are used to transmit signals of high frequency, such as light pulses as in fibre optical cables. Electrical communication cables for telephone and data transmission are normally twisted pair cables. Assembly of the twisted pair cables involves passing the insulated conductor through machinery and this may cause abrasion or deformation. The twisting process is extremely delicate as back tension will greatly affect the tightness and hence separation of the conductors. Excess tension during subsequent sheathing and installation will equally affect conductor separation, in effect a crush phenomenon.

Another type of electrical communication cable is the coaxial cable construction. Coaxial cables are used for transmission of radio, cable TV and data signals. Coaxial cables consist of two separate parallel conductors that are separated by an insulating dielectric.

The conductors in communication cables are metal and the insulation can be made from different materials, suitably polyolefins such as polyethylene.

During the production of polyolefins byproducts in particular traces of acidic byproducts such as HCl are produced which can be present in the polymer. In order to prevent that theses traces of acids affect critical, in particular electrical properties of the polymer negatively or cause corrosion problems, acid scavengers are added to the polymer composition.

A variety of acid scavengers applied in polyolefin compositions is known in the art. One class of acid scavengers which are regularly used are stearates. However, acid scavengers can affect the properties of a polyolefin composition and, hence, the products made from the respective polyolefin composition.

As the frequency of the transmitted signal increases, the relative permittivity of the insulation becomes more important. The relative permittivity is a material specific property, and it is lower for air than for polyolefins, such as polyethylene. Therefore, foaming polyolefin composition insulation is performed. The gas is introduced and the relative permittivity decreases linearly with expansion degree. For foaming so called blowing agents are used whereby foaming of polyolefin compositions can be done by either using chemical or physical blowing agents, or a combination of both. Chemical blowing agents are substances which release blowing gas through thermal decomposition reactions and the chemical blowing agent is consumed in the foaming reaction.

For foaming polymer compositions not only blowing agents but also nucleating agents are used. A nucleating agent provides points in the insulation where the energy needed for bubble formation is lower. These nucleating agents can be either passive or active. An active nucleating agent is a substance that decomposes into gaseous products i.e. a chemical blowing agent, while passive nucleating agents are particles that only provide local points of lower energy where bubble formation is more likely to happen.

In US 8877823 B2 foamable fluoropolymer compositions are disclosed wherein blowing agents along with nucleating agents are used. During the preparation of the fluoropolymers hydrogen fluoride (HF) is produced which is neutralized by talc which is added as nucleating agent as well as foaming agent. Besides, it is disclosed that the addition of carbonates enhances the foaming levels.

In polyolefin compositions regularly the addition of further additives such as the previously mentioned acid scavengers is performed. However, such additives can influence the properties, in particular electrical properties, of a foamable polymer composition negatively.

In particular is it known to the person skilled in the art that acid scavengers and in particular specific acid scavengers of the stearate type can negatively influence the dissipation factor of a foamable polymer composition.

It is therefore an object of the present invention to provide a foamable polymer composition which overcomes the above-mentioned problems.

It is also an object of the present invention to provide a foamable polymer composition having improved electrical properties, in particular an improved dissipation factor. It is still another object of the invention to provide a foamable polymer composition comprising a mineral nucleating agent being at least one zeolite, at least one metal carbonate or at least one metal hydrogen carbonate having an improved dissipation factor.

It is a further object of the invention is to reduce the amount of acid scavenger or even allow the omission of an acid scavenger, in particular of the stearate type, in a foamable polymer composition.

It is thus an object of the invention to design a blend that results in a homogenous foam having an improved dissipation factor that can be extruded at any cable extruder. Besides, it is an object to provide a cable with an improved dissipation factor.

The present invention is based on the surprising finding that all the above-mentioned objects can be solved by using a mineral nucleating agent comprising at least one zeolite, at least one metal carbonate or at least one metal hydrogen carbonate, preferably in combination with a blowing agent and/or in the absence of an acid scavenger, in particular an acid scavenger of the stearate type, in a foamable polymer composition.

Therefore, the invention provides a foamable polymer composition comprising

(A) a first polyolefin polymer having an $MFR_2$ (2,16 kg; 190 °C) of 0.1 to 25 g/10min measured according to ISO 1133;

(B) a second polyolefin polymer having an $MFR_2$ (2.16 kg; 190 °C) of 2 to 15 g/10min measured according to ISO 1133, and

(C) a mineral nucleating agent (C) in an amount of 0.001 wt.% to 1 wt.% based on the total foamable polymer composition,

wherein the mineral nucleating agent (C) comprises at least one zeolite, at least one metal carbonate or at least one metal hydrogen carbonate;

wherein the first polyolefin polymer (A) has a higher density than the second polyolefin polymer (B); and

wherein the foamable polymer composition has a dissipation factor at 1.9 GHz of $116 \cdot 10^{-6}$ or lower.

The invention further provides a foamed polymer composition obtained by foaming the foamable polymer composition according to the invention.

Further provided is a cable comprising at least one layer which comprises the foamable polymer composition according to the invention, or the foamed polymer composition according to the invention.

The invention further provides the use of the foamable polymer composition for lowering the dissipation factor of a cable.

Foamable means that it is possible to produce at least one layer in a cable from the composition that is foamed in, for example, an extrusion process.

The present invention has several advantages. The inventive foamable polymer composition has an improved dissipation factor. Besides, the composition has a lowered amount of acidic content by applying the mineral nucleating agent (C) comprising at least one zeolite, at least one metal carbonate or at least one metal hydrogen carbonate.

Mineral nucleating agents are typically a mineral with high surface area. The term mineral nucleating agent as used herein also encompasses zeolites as such. The interface between a mineral nucleating agent and a polymer composition melt will serve as nucleating sites for bubble formation during the foaming process as the energy required for bubble formation is lower in this interface than in the bulk polymer melt.

The mineral nucleating agent (C) in the present invention comprises at least one zeolite, at least one metal carbonate or at least one metal hydrogen carbonate.

The mineral nucleating agent (C) preferably comprises at least one metal carbonate or at least one metal hydrogen carbonate; or

the mineral nucleating agent (C) preferably comprises magnesium carbonate, calcium carbonate, magnesium-aluminium hydroxycarbonates and/or mixtures thereof; or

the mineral nucleating agent (C) is preferably selected from the group of calcium carbonate, hydrotalcite, magnesium carbonate and/or dolomite, preferably calcium carbonate, magnesium carbonate or dolomite.

According to a preferred embodiment the mineral nucleating agent (C) has the general formula

$$M'_x M''_y (CO_3)_z \qquad (I)$$

with M' being selected from the group consisting of sodium, potassium, beryllium, magnesium, and calcium; with M'' being selected from the group consisting of sodium, potassium, beryllium, magnesium, calcium, and aluminium; with x being 1, 2 or 3, preferably 1 or 2; with y being 0, 1, 2 or 3, preferably 0, 1 or 2; and with z being 1, 2 or 3, preferably 1 or 3.

To obtain a uniform distribution of the mineral nucleating agent (C) in the foamable polymer composition, the mineral nucleating agent (C) is added to, preferably compounded with or melt mixed with, the foamable polymer composition. The mineral nucleating agent (C) has preferably the form of a powder, that is, the form of small particles.

The mineral nucleating agent (C) has preferably a particle size ($d_{90}$) of 25 $\mu$m or less, preferably in the range of 0.5 to 25 $\mu$m, and more preferably in the range of 1 to 20 $\mu$m.

Further the mineral nucleating agent (C) has preferably a particle size (dso) of 15 $\mu$m or less, preferably in the range of 0.1 to 15 $\mu$m, and more preferably in the range of 0.5 to 10 $\mu$m.

Throughout the present application, the particle size is described by its particle size distribution. The value d, represents the diameter relative to which x % by weight of the particles have diameters less than dx. The $d_{50}$ value is thus the "median particle size" at which 50 wt.% of all particles are smaller than the indicated particle size. The $d_{90}$ value is the value where 90 wt.% of all particles have a diameter less than the $d_{90}$.

It has been found that applying a mineral nucleating agent (C) as discussed hereinbefore allows not only to reduce the amount of acid scavenger, or even omit the acid scavenger to be added, but also leads to improved electrical properties of the foamable polymer composition. In particular, the dissipation factor is lowered.

According to a preferred embodiment the foamable polymer composition does not comprise an acid scavenger. Preferably the foamable polymer composition does not comprise an acid scavenger of the stearate type. More preferably the foamable polymer composition does not comprise a metal stearate, even more preferably does not comprise calcium stearate, sodium stearate, zinc stearate or mixtures thereof, and most preferably does not comprise zinc stearate.

The present invention thus preferably avoids the use of acid scavengers, in particular the use of metal stearates, which influence electrical properties such as the dissipation factor negatively.

The dissipation factor, also known as tan $\delta$, is a measure of the degree of power dissipation in a dielectric material, that is, a measure how much of the electrical energy that is transformed into heat in the dielectric material. The foamable polymer composition has a dissipation factor at 1.9 GHz of $116 \cdot 10^{-6}$ or lower.

The foamable polymer composition has preferably a dissipation factor at 1.9 GHz of $\cdot$ $114 \cdot 10^{-6}$ or lower, more preferably of $112 \cdot 10^{-6}$ or lower, and more preferably of $110 \cdot 10^{-6}$ or lower.

The foamable polymer composition has preferably a dissipation factor at 1.9 GHz of $1 \cdot 10^{-6}$ to $116 \cdot 10^{-6}$, more preferably of $10 \cdot 10^{-6}$ to $114 \cdot 10^{-6}$, more preferably $10 \cdot 10^{-6}$ to $112 \cdot 10^{-6}$, and even more preferably of $50 \cdot 10^{-6}$ to $110 \cdot 10^{-6}$.

The foamable polymer composition preferably comprises a blowing agent (D), preferably in an amount of 0.01 wt.% to 2 wt.%, more preferably of 0.05 to 1.5 wt.%, and even more preferably of 0.07 to 1 wt.% based on the total foamable polymer composition.

A blowing agent is a substance which is capable of producing a cellular structure via a foaming process in the foamable polymer composition. A blowing agent is typically applied when the polymer is melted. The cellular structure in the polymer matrix reduces density and the relative permittivity of the foamable polymer composition.

The blowing agent is preferably a chemical blowing agent. Chemical blowing agents are preferably selected from the group consisting of hydrazine, hydrazide, or azodicarbonamide (ADCA), citric acid, or a derivate of citric acid, or those based on combinations of solid organic acids (or a metal salt thereof) and alkali metal carbonate(s) or alkali metal bicarbonate(s).

According to a preferred embodiment the blowing agent (D) is selected from the group of citric acid and derivatives of citric acid. Citric acid and derivatives of citric acid decompose into water, carbon dioxide and solid decomposition products. The decomposition reactions are endothermic meaning that a continuous supply of heat energy is required in order for it to occur. The decomposition temperatures of citric acid and derivatives of citric acid are well above the melting points of polyolefin polymers and can thus be compounded into the polyolefin polymer prior to cable extrusion without pre-decomposition in the mixing step.

Preferably, the derivative of citric acid comprises alkali metal salts of citric acid, esters of citric acid or mixtures thereof. The alkali metal salts of citric acid preferably comprise one or more selected from the group consisting of monosodium citrate, disodium citrate, trisodium citrate, monopotassium citrate, dipotassium citrate and tripotassium citrate. Among the aforementioned alkali metal salts monosodium citrate is most preferred.

Preferably, the blowing agent (D) does not comprise halogenated hydrocarbons and/or fluororesins. Halogenated hydrocarbons are, for example, hydrofluorocarbons (HFC), hydrochlorofluorocarbons (HCFC) and perfluorocarbons (PFC). Fluororesins are resins comprising fluoro-carbon bonds, for example, polytetrafluorethylene (PTFE).

The distribution of the mineral nucleating agent (C) and the blowing agent (D) in the polymer composition is improved by preferably melt mixing a respective blowing masterbatch into the foamable polymer composition by compounding prior to the extrusion of the foamable polymer composition in an extruder. This results in an improved cell structure as the gas released from decomposition of the blowing agent (D) and solid particles of the mineral nucleating agent (C) acting as bubble nucleation sites are better distributed in the polyolefin polymer melt. For communication cables it is critical to have a good cell structure within the foamed insulation in order to have isotropic electrical properties. It is desired to have a cell structure with many small cells evenly distributed within the insulation. The cell structure is also important for mechanical properties. Having many small cells that are well distributed will give better crush resistance compared to a structure with larger cells that are not homogeneously distributed as this will give weak parts in the insulation.

Preferably, a blowing masterbatch comprises the mineral nucleating agent (C) and the blowing agent (D) as described in all embodiments above, more preferably the blowing masterbatch consists of the nucleating agent (C) and the blowing agent (D) as described in all embodiments above. The blowing masterbatch is added to, preferably compounded with or melt mixed with, the foamable polymer composition. The blowing masterbatch may further comprise a polymeric carrier.

The foamable polymer composition according to the invention comprises a first polyolefin polymer (A) and a second polyolefin polymer (B).

The first polyolefin polymer (A) has an $MFR_2$ (2.16 kg; 190 °C) of preferably 0.1 to 25 g/10min, more preferably of 0.5 to 20 g/10min, more preferably of 2 to 17 g/10min, more preferably of 4 to 14 g/10min, and most preferably of 6 to 10 g/10min, measured according to ISO 1133-1.

The second polyolefin polymer (B) has an $MFR_2$ (2.16 kg; 190 °C) of 2 to 15 g/10min measured according to ISO 1133-1. Preferably, the second polyolefin polymer (B) has an $MFR_2$ (2.16 kg; 190 °C) of 2.5 to 12 g/10min, more preferably of 3 to 10 g/10min, more preferably of 3.5 to 8 g/10min, and most preferably of 4 to 6 g/10min measured according to ISO 1133-1.

The first polyolefin polymer (A) is present preferably in amount of 20 to 95 wt.%, more preferably in an amount of 30 to 90 wt.%, more preferably in an amount of 35 to 85 wt.%, even more preferably in an amount of 50 to 85 wt.% and most preferably in an amount of 60 to 80 wt.%, based on the total foamable polymer composition and the second polyolefin polymer (B) is present preferably in an amount of 5 to 80 wt.%, more preferably in an amount of 10 to 70 wt.%, more preferably in an amount of 15 to 65 wt.%, even more preferably in an amount of 15 to 50 wt.% and most preferably in an amount of 20 to 40 wt.%, based on the total foamable polymer composition.

The first polyolefin polymer (A) is preferably an ethylene homo- or copolymer or a propylene homo- or copolymer, more preferably an ethylene copolymer, and the second polyolefin polymer (B) is preferably an ethylene homo- or copolymer or a propylene homo- or copolymer, more preferably an ethylene homopolymer.

The first polyolefin polymer (A) is preferably a high density polyethylene homoor copolymer having a density of 935 to 970 kg/m³, measured according to ISO 1183-1 and the second polyolefin polymer (B) is preferably a low density polyethylene homo- or copolymer having a density of 880 kg/m³ to 930 kg/m³ measured according to ISO 1183-1.

More preferably, the high density polyethylene (HDPE) is a copolymer and the low density polyethylene (LDPE) is a homopolymer. Homopolymer means that the low density polyethylene (LDPE), respectively, comprise at least 90 wt.% ethylene monomer, preferably at least 95 wt.% ethylene monomer, and most preferably at least 99 wt.% ethylene monomer.

In case the high density polyethylene (HDPE) is a copolymer, the copolymer comprises ethylene monomer, preferably in an amount of at least 50 wt.% based on the total copolymer, and one or more comonomer(s). The comonomer can be alpha-olefins having 3 to 12 carbon atoms, e.g. propene, butene, hexene, octene, decene.

The low density polyethylene (LDPE) is preferably a homopolymer.

For foamed polyethylene used in communication cables, both electrical and mechanical properties are important. HDPE has a lower dielectric constant and lower loss factor than LDPE as well as higher strength and hardness.

The high density polyethylene (HDPE) polymer is polymerised in low pressure process, and is, for example, an optionally HDPE homopolymer or an optionally HDPE copolymer of ethylene with one or more comonomer(s) as described above. Further, the HDPE is polymerised in a low pressure polymerisation process in the presence of a catalyst. The catalyst can be for example a Phillips catalyst, a metallocene catalyst or a Ziegler-Natta catalyst. The polymerisation can be for example either gas phase polymerisation, slurry polymerisation or a combination of slurry polymerisation/gas-phase polymerisation or gas-phase polymerisation/gas-phase polymerisation. The polymerisation can also be solution polymerisation.

In order to foam a foamable polymer composition it is necessary that the foamable polymer composition has a good melt strength as too poor melt strength results in a collapsed cell structure which is not good for either mechanical or electrical properties of the cable layer, typically insulation layer. The melt strength can be improved by blending in a LDPE in the foamable polymer composition in order to improve the melt strength and to ensure a foamed layer with a closed cell structure and homogeneous cell distribution.

The low density polyethylene (LDPE) polymer is polymerised in a high pressure radical polymerisation process. Further, the LDPE is polymerised in a highpressure polymerisation process in the presence of an initiator(s) and chain transfer agents, such as propane, propione aldehyde and methyl ethyl ketone, to control the MFR.

The LDPE can be produced in, for example, a tubular polymerisation reactor, or in an autoclave polymerisation reactor.

The foamable polymer composition preferably comprises an antioxidant. The antioxidant is preferably a phenolic antioxidant, a phosphorous containing antioxidant or a blend thereof. The phenolic antioxidant is preferably a blend of pentaerythrityl-tetrakis(3-(3',5'-di-tert-butyl-4-hydroxyphenyl)-propionate (CAS 6683-19-8; commercially available from BASF under trade name Irganox 1010) and tris-(2,4-di-tert-butylphenyl)phosphite (CAS 31570-04-4; commercially available from BASF under trade name Irgafos 168). This antioxidant blend is commercially available as Irganox B561 from BASF.

The antioxidant is present preferably in an amount of 0.01 wt.% to 2 wt.%, more preferably in an amount of 0.04 wt.% to 1 wt.%, and most preferably in an amount of 0.08 wt.% to 0.5 wt.%, based on the total foamable polymer composition.

A foamed polymer composition can be obtained by foaming the foamable polymer composition according to the invention.

Foaming is done by heating the foamable polymer composition to a temperature of preferably 130 °C to 240 °C, more preferably 130 °C to 230 °C, even more preferably to 130 °C to 220 °C. In this temperature range the blowing agent (D) present in the foamable polymer composition thermally decomposes into gaseous products as described above, thereby leading to a foamed polymer composition. Heating is preferably performed in an extruder. After exiting a die of the extruder, the gaseous products can expand, thereby forming a foamed polymer composition.

Preferably, a co-blowing agent (E) is added to the foamable polymer composition, preferably during extrusion of the foamable polymer composition in an extruder. During extrusion the co-blowing agent ((E)) is melt mixed with the molten polymer composition and the molten polymer composition is allowed to expand at the exit from the die of the extruder so as to obtain a foamed polymer composition.

Using the co-blowing agent (E) together with the blowing agent (D) is particularly advantageous so as to obtain foamed polymer compositions with a higher foaming degree than using the blowing agent (D) alone.

Extrusion is preferably performed in a gas injection foaming line.

The co-blowing agent (E) comprises preferably a gas, and the gas comprises $N_2$, CO, $CO_2$, Ar or mixtures thereof. More preferably, the co-blowing agent (E) comprises $N_2$ and/or $CO_2$, more preferably the co-blowing agent (E) consists of N2 and/or $CO_2$.

The co-blowing agent (E) is used preferably in amount of 0.01 wt.% to 5 wt.%, more preferably 0.015 wt.% to 2.5 wt.%, more preferably in amount of 0.02 wt.% to 0.5 wt.%, more preferably in amount of 0.03 wt.% to 0.1 wt.%, based on the total foamable polymer composition.

The foamed polymer composition has a mean cell diameter preferably of 10 $\mu$m to 250 $\mu$m, more preferably of 50 $\mu$m to 125 $\mu$m, more preferably of 60 $\mu$m to 100 $\mu$m, and most preferably of 65 $\mu$m to 90 $\mu$m.

The foamed polymer composition has a density preferably of 95 kg/m$^3$ to 860 kg/m$^3$, more preferably 150 kg/m$^3$ to 800 kg/m$^3$, more preferably 400 kg/m$^3$ to 750 kg/m$^3$, more preferably 420 kg/m$^3$ to 730 kg/m$^3$, more preferably 440 kg/m$^3$ to 710 kg/m$^3$, and most preferably 460 kg/m$^3$ to 690 kg/m$^3$.

The invention also provides a cable comprising at least one layer which comprises the foamable polymer composition according to the invention or which comprises the foamed polymer composition according to the invention. Thus, the cable comprises at least one layer which comprises the foamable polymer composition according to any of the embodiments described above, or the cable comprises at least one layer which comprises the foamed polymer composition according to any of the embodiments described above.

Preferably, the cable is a communication cable, preferably a coaxial cable or a twisted pair cable.

The at least one layer is preferably an insulation layer of the cable. The insulation layer is the layer which is surrounding the innermost conducting wire, the conducting wire is usually made of copper. In preferred embodiments, the insulation layer comprising the foamable polymer composition of the invention or the foamed polymer composition of the invention is in direct contact with the conducting wire. The typical thickness of an insulation layer is from 0.01 mm to 80 mm for coaxial cables, and 0.1 mm to 2 mm for data cables.

The foamed polymer composition according to the invention can be preferably produced by a process for producing a foamed polymer composition, the method comprising the steps of

a) providing a foamable polymer composition according to the invention,

b) heating the foamable polymer to a temperature of 130 °C to 240 °C to obtain a molten polymer composition, and

c) foaming the molten polymer composition.

Preferably, the heating of step b) takes place in an extruder and the foaming of the obtained molten polymer composition in step c) takes place after the molten polymer composition exits a die of the extruder.

Preferably, a co-blowing agent (E) is added to the foamable polymer composition in step b). Adding is preferably done by injecting the co-blowing agent (E) into the foamable polymer composition or by melt-mixing the co-blowing agent (E) with the foamable polymer composition. Melt-mixing is preferably done in an extruder.

Preferably, the extruder can be any extruder known in the art suitable for melt mixing a polymer melt with a blowing agent.

All the above described embodiments of the foamable polymer composition according to the invention are also preferred embodiments of the foamable polymer composition used in the process for producing a foamed polymer composition.

All preferred embodiments of the mineral nucleating (C) as described above are preferred embodiments of the mineral nucleating agent (C) used in the process for producing a foamed composition. All preferred embodiments of the blowing agent (D) as described above are preferred embodiments of the blowing agent (D) used in the process for producing a foamed polymer composition. All preferred embodiments of the co-blowing agent (E) as described above are preferred embodiments of the co-blowing agent (E) used in the process for producing a foamed polymer composition.

The invention also relates to the use of a foamable polymer composition according to the invention for lowering the dissipation factor of a cable.

All the above described embodiments of the foamable polymer composition according to the invention are also preferred embodiments of the foamable polymer composition.

Furthermore, the invention relates to the use of a foamable polymer composition according to the invention for lowering the dissipation factor of a cable which comprises the foamable polymer composition according to the invention or which comprises the foamed polymer composition according to the invention.

All the above described embodiments of the foamable polymer composition according to the invention and the foamed polymer composition also apply here.

## EXPERIMENTAL PART

The following Examples are included to demonstrate certain aspects and embodiments of the invention as described in the claims. It should be appreciated by those of skill in the art, however, that the following description is illustrative only and should not be taken in any way as a restriction of the invention.

## A. Measurement Methods

The following definitions of terms and determination methods apply for the above general description of the invention as well as to the below examples unless otherwise defined.

### 1) Melt Flow Rate

The melt flow rate (MFR) is determined according to ISO 1133-1 and is indicated in g/10 min. The MFR is an indication of the flowability, and hence the processability, of the polymer. The higher the melt flow rate, the lower the viscosity of the polymer.

The $MFR_2$ of polyethylene (co-)polymers is measured at a temperature 190 °C and at a load of 2.16 kg. The $MFR_2$ of polypropylene (co-)polymers is measured at a temperature 230 °C and at a load of 2.16 kg.

### 2) Density of the solid material

The method for determining the density of the foamable polymer compositions is following ISO 17855-2 for sample preparation and ISO 1183-1 / method A for the density measurement.

Compression moulding is done in a controlled cooling press, with a moulding temperature of 180 °C for polyethylene, and a cooling rate of 15 °C/min. The specimens are conditioned at 23 ± 2 °C for minimum of 16 hours. Density is determined at 23 ± 0.1 °C using isododecane as the immersion-liquid, and with no buoyancy correction.

### 3. Dielectric Properties (Dielectric loss tangent value (tan $\delta$) - dissipation factor at 1.9 GHz)

#### a) Preparation of the plaques

Polymer compounds have been compression moulded at 140°C in a frame to yield plates of 4 mm thickness, 80 mm width and 130 mm length. The pressure has been adjusted high enough to obtain a smooth surface of the plates. A visual inspection of the plates showed no inclusions such as trapped air or any other visible contamination.

#### b) Characterization of the plaques for dielectric properties

For the measurement of the dielectric constant and the tangent delta (tan $\delta$) of the materials, a split-post dielectric resonator has been used together with a network analyser (Rohde & Schwarz ZVL6). The technique measures the complex permittivity of dielectric laminar specimen (plaques) in the frequency range from 1 - 10 GHz. The test is conducted at 23 °C.

The split-post dielectric resonator (SPDR) was developed by Krupka and his collaborators [see: J. Krupka, R. G. Geyer, J. Baker-Jarvis and J. Ceremuga, 'Measurements of the complex permittivity of microwave circuit board substrates using a split dielectric resonator and re-entrant cavity techniques', Proceedings of the Conference on Dielectric Materials, Measurements and Applications - DMMA '96, Bath, UK, published by the IEE, London, 1996.] and is one of the easiest and most convenient techniques to use for measuring microwave dielectric properties. Two identical dielectric resonators are placed coaxially along the z-axis so that there is a small laminar gap between them into which the specimen can be placed to be measured. By choosing suitable dielectric materials the resonant frequency and Q-factor of the SPDR can be made to be temperature stable. Once a resonator is fully characterized, only three parameters need to be measured to determine the complex permittivity of the specimen: its thickness and the changes in resonant frequency, Af, and in the Q-factor, AQ, obtained when it is placed in the resonator.

Specimens of 4 mm thickness have been prepared by compression moulding as described above and measured at a high frequency of 1.9 GHz.

A comprehensive review of the method is found in J. Krupka, R.N. Clarke, O.C. Rochard and A.P. Gregory, "Split-Post Dielectric Resonator technique for precise measurements of laminar dielectric specimens - measurement uncertainties" in Proceedings of the XIII Int. Conference MIKON'2000, Wroclaw, Poland, pp 305 - 308, 2000.

<u>4. Particle size distribution</u>

The particle size distribution was determined by laser diffraction and measured in air using a Mastersizer 3000 (Malvern Instruments, UK).

**B. Materials**

HDPE is a unimodal Ziegler-Natta catalysed HDPE copolymer with butene as comonomer with an $MFR_2$ of 8 g/10 min and a density 963 kg/$m^3$.

LDPE is an autoclave LDPE having an $MFR_2$ of 4.5 g/10 min and a density of 923 kg/$m^3$. CA7230 is commercially available from Borealis AG.

Supercell 7155-M1-300 is a commercially available azodicarbonamide (ADCA) based blowing agent master batch from Americhem.

Irganox 1010 is a phenolic antioxidant responsible to improve polymer ageing properties, commercially available from BASF. Irgafos 168 is an aromatic phosphite responsible to improve process stabilization, commercially available from BASF.

Dolomite is a mineral nucleating agent with a particle size ($d_{90}$) of 17$\mu$m and (dso) of 5.5$\mu$m commercially available from Tramaco GmbH.

Sodium dihydrogen citrate (CAS 18996-35-5) is a blowing agent and Zinc stearate (CAS 557-05-1) is an acid scavenger.

**C. Preparation of examples**

The examples in Table 1 were prepared in a Buss MDK 46 continuous extruder. The line is a single screw mixer with a screw of 46mm and 11 L/D with an under water pelletizing unit cutting pellets in the molten stage. The mixer temperatures were set to 140-145°C. The mixer screw speed was 130 rpm and the throughput 3 kg/h.

Table 1: Composition of comparative (CE) and inventive (IE) examples and results of measurement of dissipation factor before foaming.

| Material | CE1 | CE2 | CE3 | IE1 | IE2 |
|---|---|---|---|---|---|
| HDPE / wt.% (A) | 69.6 | 69.6 | 69.6 | 69.6 | 69.6 |
| LDPE / wt.% (B) | 29.8 | 30.08 | 29.91 | 30.13 | 29.96 |
| Supercell / wt.% | 0.45 | -- | -- | -- | -- |
| Sodium dihydrogen citrate / wt.% (D) | -- | 0.08 | 0.15 | 0.08 | 0.15 |
| Dolomite / wt.% (C) | -- | 0.09 | 0.19 | 0.09 | 0.19 |
| Irganox 1010 /wt.% | 0.02 | 0.02 | 0.02 | 0.02 | 0.02 |
| Irgafos 168 / wt.% | 0.08 | 0.08 | 0.08 | 0.08 | 0.08 |
| Zn stearate / wt.% | 0.05 | 0.05 | 0.05 | -- | -- |
| | | | | | |

(continued)

| Material | CE1 | CE2 | CE3 | IE1 | IE2 |
|---|---|---|---|---|---|
| Dissipation factor at 1.9 GHz ($\cdot\, 10^{-6}$) | 139 | 117 | 121 | 100 | 109 |

The electrical loss factor (dissipation factor) has been measured on all compositions. After compounding as described above, all materials were compression moulded under foaming temperature (140°C) as described above. Those plaques were submitted to loss factor measurement (tan $\delta$) at 1.9 GHz.

It has surprisingly been found, that the inventive examples IE1 and IE2 in Table 1 show a lower dissipation factor at 1.9 GHz without the presence of an acid scavenger in comparison to an insulation formulation containing ADCA (CE1) or the use of zinc stearate as acid scavenger (CE2, CE3).

## Claims

1. Foamable polymer composition comprising

   (A) a first polyolefin polymer having an $MFR_2$ (2,16 kg; 190 °C) of 0.1 to 25 g/10min measured according to ISO 1133;
   (B) a second polyolefin polymer having an $MFR_2$ (2.16 kg; 190 °C) of 2 to 15 g/10min measured according to ISO 1133, and
   (C) a mineral nucleating agent (C) in an amount of 0.001 wt.% to 1 wt.% based on the total foamable polymer composition,

   wherein the mineral nucleating agent (C) comprises at least one zeolite, at least one metal carbonate or at least one metal hydrogen carbonate;
   wherein the first polyolefin polymer (A) has a higher density than the second polyolefin polymer (B); and
   wherein the foamable polymer composition has a dissipation factor at 1.9 GHz of $116\cdot10^{-6}$ or lower measured according to the method described under "Measurement Methods".

2. The foamable polymer composition according to claim 1,

   wherein the mineral nucleating agent (C) has a particle size ($d_{90}$) of 25 $\mu$m or less, preferably in the range of 0.5 to 25 $\mu$m, and more preferably in the range of 1 to 20 $\mu$m; and/or
   wherein the mineral nucleating agent (C) has a particle size (dso) of 15 $\mu$m or less, preferably in the range of 0.1 to 15 $\mu$m, and more preferably in the range of 0.5 to 10 $\mu$m.

3. The foamable polymer composition according to claim 1 or 2,

   wherein the mineral nucleating agent (C) comprises at least one metal carbonate or at least one metal hydrogen carbonate; or
   wherein the mineral nucleating agent (C) has the general formula

   $$M'_x M''_y (CO_3)_z \qquad (I)$$

   with M' being selected from the group consisting of sodium, potassium, beryllium, magnesium, and calcium; with M" being selected from the group consisting of sodium, potassium, beryllium, magnesium, calcium, and aluminium; with x being 1, 2 or 3, preferably 1 or 2; with y being 0, 1, 2 or 3, preferably 0, 1 or 2; and with z being 1, 2 or 3, preferably 1 or 3; or
   wherein the mineral nucleating agent (C) comprises magnesium carbonate, calcium carbonate, magnesium-aluminium hydroxycarbonates and/or mixtures thereof; or
   wherein the mineral nucleating agent (C) is selected from the group of calcium carbonate, hydrotalcite, magnesium carbonate and/or dolomite, preferably calcium carbonate, magnesium carbonate or dolomite.

4. The foamable polymer composition according to any one of the preceding claims,
   wherein the foamable polymer composition comprises a blowing agent (D), preferably in an amount of 0.01 wt.%

to 2 wt.% based on the total foamable polymer composition.

5. The foamable polymer composition according to any one of the preceding claims,
wherein the foamable polymer composition does not comprise an acid scavenger, preferably the foamable polymer composition does not comprise a metal stearate, more preferably does not comprise calcium stearate, sodium stearate, zinc stearate or mixtures thereof, most preferably does not comprise zinc stearate.

6. The foamable polymer composition according to any one of the preceding claims,
wherein the first polyolefin polymer (A) has an $MFR_2$ (2.16 kg; 190 °C) of 0.5 to 20 g/10min measured according to ISO 1133.

7. The foamable polymer composition according to any one of the preceding claims,
wherein the first polyolefin polymer (A) is present in an amount of 20 to 95 wt.% based on the total foamable polymer composition and wherein the second polyolefin polymer (B) is present in an amount of 5 to 80 wt.% based on the total foamable polymer composition, preferably the first polymer (A) is present in an amount of 35 to 85 wt.% based on the total foamable polymer composition and wherein the second polyolefin polymer (B) is present in an amount of 15 to 65 wt.% based on the total foamable polymer composition.

8. The foamable polymer composition according to any one of the preceding claims,
wherein the first polyolefin polymer (A) is a high density polyethylene homo- or copolymer having a density of 935 kg/m$^3$ to 970 kg/m$^3$ measured according to ISO 1183-1, and the second polyolefin polymer (B) is a low density polyethylene homopolymer having a density of 880 kg/m$^3$ to 930 kg/m$^3$ measured according to ISO 1183-1.

9. The foamable polymer composition according to any one the preceding claims,

wherein the foamable polymer composition has a dissipation factor at 1.9 GHz of $114 \cdot 10^{-6}$ or lower, preferably of $112 \cdot 10^{-6}$ or lower, and more preferably of $110 \cdot 10^{-6}$ or lower; or
wherein the foamable polymer composition has a dissipation factor at 1.9 GHz of $1 \cdot 10^{-6}$ to $116 \cdot 10^{-6}$, preferably of $10 \cdot 10^{-6}$ to $114 \cdot 10^{-6}$, more preferably $10 \cdot 10^{-6}$ to $112 \cdot 10^{-6}$, and even more preferably of $50 \cdot 10^{-6}$ to $110 \cdot 10^{-6}$.

10. Foamed polymer composition obtained by foaming the foamable polymer composition according to any one of claims 1 to 9.

11. Foamed polymer composition according to claim 10,
wherein foaming is done by heating the foamable polymer composition to a temperature of 130°C to 240°C.

12. Foamed polymer composition according to claims 10 or 11,
wherein a co-blowing agent (E) is added to the foamable polymer composition, preferably the co-blowing agent (E) comprises $N_2$, CO, $CO_2$, Ar or mixtures thereof; preferably the co-blowing agent (E) is used in an amount of 0.01 wt.% to 5 wt.% based on the total foamable polymer composition.

13. The foamed polymer composition according to any one of claims 10 to 12, wherein the foamed polymer composition has a density of 95 kg/m$^3$ to 860 kg/m$^3$.

14. Cable comprising at least one layer which comprises the foamable polymer composition according to claims 1 to 9, or which comprises the foamed polymer composition according to claims 10 to 13.

15. Use of a foamable polymer composition according to claims 1 to 9 for lowering the dissipation factor of a cable.

Europäisches
Patentamt

European
Patent Office

Office européen
des brevets

## EUROPEAN SEARCH REPORT

Application Number

EP 21 20 1737

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 670 599 A1 (BOREALIS AG [AT]) 24 June 2020 (2020-06-24) * table 3 * | 1-15 | INV. C08J9/00 C08J9/10 C08K5/00 |
| X | EP 3 670 600 A1 (BOREALIS AG [AT]) 24 June 2020 (2020-06-24) * table 3 * | 1-15 | C08L23/06 H01B3/30 C08K3/01 |
| A | US 2019/092918 A1 (SUN GANGWEI [CN] ET AL) 28 March 2019 (2019-03-28) * table 1 * | 1-15 | |
| T | EP 3 252 094 A1 (BOREALIS AG [AT]) 6 December 2017 (2017-12-06) | | |

| TECHNICAL FIELDS SEARCHED (IPC) |
|---|
| C08J C08K H01B C08L |

The present search report has been drawn up for all claims

| Place of search | Date of completion of the search | Examiner |
|---|---|---|
| The Hague | 24 March 2022 | Rinkel, Bert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 1737

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2022

| Patent document cited in search report | | Publication date | Patent family member(s) | | Publication date |
|---|---|---|---|---|---|
| EP 3670599 | A1 | 24-06-2020 | AU 2019400562 | A1 | 29-07-2021 |
| | | | CN 113242881 | A | 10-08-2021 |
| | | | EP 3670599 | A1 | 24-06-2020 |
| | | | EP 3898826 | A1 | 27-10-2021 |
| | | | TW 202033639 | A | 16-09-2020 |
| | | | US 2022064418 | A1 | 03-03-2022 |
| | | | WO 2020126488 | A1 | 25-06-2020 |
| EP 3670600 | A1 | 24-06-2020 | AU 2019407087 | A1 | 29-07-2021 |
| | | | CN 113166498 | A | 23-07-2021 |
| | | | EP 3670600 | A1 | 24-06-2020 |
| | | | EP 3898827 | A1 | 27-10-2021 |
| | | | TW 202033638 | A | 16-09-2020 |
| | | | US 2022064419 | A1 | 03-03-2022 |
| | | | WO 2020126487 | A1 | 25-06-2020 |
| US 2019092918 | A1 | 28-03-2019 | BR 112018069095 | A2 | 29-01-2019 |
| | | | CA 3020188 | A1 | 05-10-2017 |
| | | | CN 108779302 | A | 09-11-2018 |
| | | | EP 3436519 | A1 | 06-02-2019 |
| | | | JP 6871269 | B2 | 12-05-2021 |
| | | | JP 2019511608 | A | 25-04-2019 |
| | | | KR 20180129812 | A | 05-12-2018 |
| | | | US 2019092918 | A1 | 28-03-2019 |
| | | | WO 2017166004 | A1 | 05-10-2017 |
| EP 3252094 | A1 | 06-12-2017 | AU 2017275684 | A1 | 20-12-2018 |
| | | | CN 109689755 | A | 26-04-2019 |
| | | | EP 3252094 | A1 | 06-12-2017 |
| | | | EP 3464443 | A1 | 10-04-2019 |
| | | | US 2020325314 | A1 | 15-10-2020 |
| | | | WO 2017207605 | A1 | 07-12-2017 |
| | | | ZA 201807861 | B | 28-08-2019 |

EPO FORM P0459

For more details about this annex : see Official Journal of the European Patent Office, No. 12/82

## REFERENCES CITED IN THE DESCRIPTION

**Patent documents cited in the description**

- US 8877823 B2

**Non-patent literature cited in the description**

- *CHEMICAL ABSTRACTS,* 6683-19-8
- *CHEMICAL ABSTRACTS,* 31570-04-4
- Measurements of the complex permittivity of microwave circuit board substrates using a split dielectric resonator and re-entrant cavity techniques. **J. KRUPKA ; R. G. GEYER ; J. BAKER-JARVIS ; J. CEREMUGA.** Proceedings of the Conference on Dielectric Materials, Measurements and Applications - DMMA '96. IEE, 1996
- **J. KRUPKA ; R.N. CLARKE ; O.C. ROCHARD ; A.P. GREGORY.** Split-Post Dielectric Resonator technique for precise measurements of laminar dielectric specimens - measurement uncertainties. *Proceedings of the XIII Int. Conference MIKON'2000,* 2000, 305-308
- *CHEMICAL ABSTRACTS,* 18996-35-5
- *CHEMICAL ABSTRACTS,* 557-05-1